# EUROPEAN PATENT SPECIFICATION

(11) **EP 3 073 083 B1**
(45) Date of publication and mention of the grant of the patent: **14.03.2018**
(21) Application number: 16162018.2
(22) Date of filing: 23.03.2016
(51) Int. Cl.: F01N 3/20, F01N 3/10, F01N 3/36, F01N 13/00, F01N 9/00

(54) **EXHAUST GAS CONTROL APPARATUS**
ABGASSTEUERUNGSVORRICHTUNG
APPAREIL DE COMMANDE DE GAZ D'ÉCHAPPEMENT

(30) Priority: 25.03.2015 JP 2015062893
(43) Date of publication of application: 28.09.2016
(73) Proprietor: Toyota Jidosha Kabushiki Kaisha, Aichi-ken Aichi 471-8571 (JP)
(72) Inventor: OTA, Hirohiko, Aichi-ken Aichi 471-8571 (JP)
(74) Representative: D Young & Co LLP

(56) References cited:
- EP-A1- 2 808 512
- WO-A1-2008/026002
- US-A1- 2012 023 905

## Description

### BACKGROUND OF THE INVENTION

### 1. Field of the Invention

The invention relates to an exhaust gas control apparatus that reduces and removes nitrogen oxide in exhaust gas by selective catalytic reduction using ammonia as a reducing agent.

### 2. Description of Related Art

In the related art, an apparatus disclosed in Japanese Patent Application Publication No. 2006-274844 (JP 2006-274844 A) is known as an exhaust gas control apparatus as described above. The exhaust gas control apparatus disclosed in JP 2006-274844 A is provided with a urea water adding valve that adds urea water to exhaust gas, a selective reduction-type catalyst device that reduces nitrogen oxide (NOx) in the exhaust gas by selective catalytic reduction using ammonia generated from the urea water as a reducing agent, and an oxidation catalyst device that oxidizes the ammonia leaking from the selective reduction-type catalyst device. The amount of the urea water that can be adsorbed by the selective reduction-type catalyst device decreases as a bed temperature of the selective reduction-type catalyst device increases. Accordingly, when the bed temperature of the selective reduction-type catalyst device rapidly rises, a large amount of ammonia is desorbed from the catalyst device, which is called ammonia slip. In the exhaust gas control apparatus according to the related art described above, the addition of the urea water is stopped, advancement of a fuel injection timing is stopped, and exhaust gas recirculation is stopped when the bed temperature of the selective reduction-type catalyst device rises rapidly. Then, the amount of the NOx in the exhaust gas discharged from a combustion chamber is increased and the desorbed ammonia is allowed to react with the NOx and be treated.

US 2012/023905 A1 relates to a system, a method, and an apparatus to engage an alternate reductant in a NOx reduction system.

WO 2008/026002 A1 relates to a low temperature hydrocarbon SCR.

EP 2 808 512 A1 relates to a post-processing system, an apparatus and a control method.

### SUMMARY OF THE INVENTION

When a urea water addition amount is limited as, for example, when the addition of the urea water is stopped for ammonia slip suppression in the exhaust gas control apparatus disclosed in JP 2006-274844 A, the amount of the NOx flowing out from the selective reduction-type catalyst device cannot be reduced in some cases to a desired amount with respect to the amount of the NOx flowing into the selective reduction-type catalyst device.

The invention provides an exhaust gas control apparatus that is capable of suppressing nitrogen oxide discharge to the outside air even when the amount of nitrogen oxide flowing out from a selective reduction-type catalyst device cannot be reduced to a desired amount with respect to the amount of the nitrogen oxide flowing into the selective reduction-type catalyst device.

An exhaust gas control apparatus for an internal combustion engine according to an aspect of the invention includes a fuel adding valve, selective reduction-type catalyst devices, an ammonia slip catalyst device, a fuel addition device, and an electronic control unit. The internal combustion engine includes a combustion chamber and an exhaust passage. The urea adding valve is configured to add urea water to exhaust gas discharged from the combustion chamber to the exhaust passage. The selective reduction-type catalyst devices are configured to reduce nitrogen oxide in the exhaust gas by selective catalytic reduction in which ammonia generated from the urea water is used as a reducing agent. The ammonia slip catalyst device has an oxidation catalyst supported therein. The ammonia slip catalyst device is placed on a downstream side of the selective reduction-type catalyst devices. The ammonia slip catalyst device is configured to oxidize the ammonia flowing out from the selective reduction-type catalyst devices. The fuel addition device is configured to add an unburned fuel to burned gas burned in the combustion chamber. The electronic control unit is configured to control the fuel addition device as an amount-increasing processing when the amount of the nitrogen oxide flowing out from the selective reduction-type catalyst devices is not reduced to a desired amount with respect to the amount of the nitrogen oxide flowing into the selective reduction-type catalyst devices and when a catalyst bed temperature of the ammonia slip catalyst device is within a temperature region where the nitrogen oxide in the exhaust gas can be reduced in the ammonia slip catalyst device by selective catalytic reduction in which hydrocarbon is used as a reducing agent such that the amount of the hydrocarbon in the exhaust gas flowing into the ammonia slip catalyst device is increased.

Provided that the catalyst bed temperature is within the appropriate temperature region, the ammonia slip catalyst device in which the oxidation catalyst is supported can reduce and remove the nitrogen oxide in the exhaust gas by the selective catalytic reduction in which the hydrocarbon in the exhaust gas is used as the reducing agent. The amount of the urea water that can be added is limited due to a constraint such as ammonia slip suppression, and the amount of the nitrogen oxide flowing out from the selective reduction-type catalyst devices cannot be reduced in some cases to the desired amount with respect to the amount of the nitrogen oxide flowing into the selective reduction-type catalyst devices.

When the amount of the nitrogen oxide flowing out from the selective reduction-type catalyst devices is not reduced to the desired amount with respect to the amount of the nitrogen oxide inflow into the selective reduction-type catalyst devices, the exhaust gas control apparatus according to the aspect described above performs the amount-increasing processing for increasing the amount of the hydrocarbon in the exhaust gas flowing into the ammonia slip catalyst device through the addition of the unburned fuel when the catalyst bed temperature of the ammonia slip catalyst device is within the temperature region where the reduction of the nitrogen oxide by the selective catalytic reduction using the hydrocarbon as the reducing agent is allowed in the ammonia slip catalyst device. When this amount-increasing processing is performed, the amount of the hydrocarbon in the exhaust gas flowing into the ammonia slip catalyst device is increased. Then, in the ammonia slip catalyst device, a larger amount of the nitrogen oxide is reduced by the selective catalytic reduction using the hydrocarbon as the reducing agent. Accordingly, discharge of the nitrogen oxide to the outside air can be suppressed even when the amount of the nitrogen oxide flowing out from the selective reduction-type catalyst devices cannot be reduced to the desired amount with respect to the amount of the nitrogen oxide flowing into the selective reduction-type catalyst devices.

In the exhaust gas control apparatus according to the aspect described above, it may be determined that the amount of the nitrogen oxide flowing out from the selective reduction-type catalyst devices is not reduced to the desired amount with respect to the amount of the nitrogen oxide flowing into the selective reduction-type catalyst devices when the amount of the nitrogen oxide in the exhaust gas passing through the selective reduction-type catalyst devices exceeds a specified value and when the amount of the urea water allowed to be added is smaller than an addition amount of the urea water required for a nitrogen oxide purification rate, a ratio of the amount of the nitrogen oxide reduced by the selective reduction-type catalyst devices to the amount of the nitrogen oxide flowing into the selective reduction-type catalyst devices, to exceed a specified value.

When the amount of the nitrogen oxide in the exhaust gas passing through the selective reduction-type catalyst devices is equal to or smaller than a specified value and when the nitrogen oxide purification rate, which is the ratio of the amount of the nitrogen oxide reduction in the selective reduction-type catalyst devices to the amount of the nitrogen oxide inflow into the selective reduction-type catalyst devices, is at least the specified value while the amount-increasing processing is performed, it is conceivable that a shortage of nitrogen oxide purification capacity of the selective reduction-type catalyst devices is eliminated. In the exhaust gas control apparatus according to the aspect described above, the electronic control unit may be configured to stop the amount-increasing processing when the amount of the nitrogen oxide in the exhaust gas passing through the selective reduction-type catalyst devices becomes equal to or smaller than the specified value while the amount-increasing processing is performed. In addition, the electronic control unit may be configured to stop the amount-increasing processing when a nitrogen oxide purification rate, a ratio of the nitrogen oxide reduction amount in the selective reduction-type catalyst devices to the amount of an inflow of the nitrogen oxide into the selective reduction-type catalyst devices, becomes at least a specified value while the amount-increasing processing is performed. According to this aspect, the amount-increasing processing is stopped in a case where the above-described conditions are satisfied while the discharge of the nitrogen oxide is suppressed, and thus fuel consumption attributable to the addition of the unburned fuel is suppressed.

When the bed temperature of the ammonia slip catalyst device deviates from the temperature region while the amount-increasing processing is performed, the removal of the nitrogen oxide by the selective catalytic reduction in the ammonia slip catalyst device in which the hydrocarbon is used as the reducing agent cannot be continued as desired despite continuation of the unburned fuel addition. In the exhaust gas control apparatus according to the aspect described above, the electronic control unit may be configured to stop the amount-increasing processing when the bed temperature of the ammonia slip catalyst device deviates from the temperature region while the amount-increasing processing is performed.

In the exhaust gas control apparatus according to the aspect described above, the electronic control unit may be configured to control the fuel addition device as the amount-increasing processing such that the amount of the unburned fuel addition increases as the amount of the nitrogen oxide flowing into the selective reduction-type catalyst devices increases. In addition, in the exhaust gas control apparatus according to the aspect described above, the electronic control unit may be configured to control the fuel addition device as the amount-increasing processing such that the amount of the unburned fuel addition during the amount-increasing processing increases as the nitrogen oxide purification rate, the ratio of the amount of the nitrogen oxide reduced by the selective reduction-type catalyst devices to the amount of the nitrogen oxide flowing into the selective reduction-type catalyst devices, decreases. In this manner, the nitrogen oxide purification capacity of the ammonia slip catalyst device can be raised in accordance with the amount of the nitrogen oxide.

The exhaust gas control apparatus according to the aspect described above may be further provided with a front-stage oxidation catalyst device having an oxidation catalyst supported therein at a part of the exhaust passage on the upstream side of the selective reduction-type catalyst devices. In this aspect, the nitrogen oxide reduction based on a selective catalytic reduction reaction in which the hydrocarbon is used as a reducing agent is performed even in this additional catalyst device provided that the unburned fuel is present in the exhaust gas. Accordingly, the electronic control unit may be configured to control the fuel addition device as the amount-increasing processing such that the amount of the unburned fuel added by the fuel addition device is an amount exceeding the amount of the unburned fuel required for supply into the exhaust gas of the hydrocarbon in an amount consumed in a nitrogen oxide reduction reaction based on selective catalytic reduction in the front-stage oxidation catalyst device in which the hydrocarbon is used as a reducing agent. According to this aspect, the hydrocarbon in the exhaust gas flowing into the ammonia slip catalyst device can be reliably increased even in a case where the front-stage oxidation catalyst device is provided. In addition, the electronic control unit may be configured to calculate a sum of the amount of the unburned fuel required for the supply into the exhaust gas of the hydrocarbon in an amount consumed in the nitrogen oxide reduction reaction based on the selective catalytic reduction in the front-stage oxidation catalyst device in which the hydrocarbon is used as the reducing agent and the amount of the unburned fuel required for the supply into the exhaust gas of the hydrocarbon in an amount consumed in the nitrogen oxide reduction reaction based on the selective catalytic reduction in the ammonia slip catalyst device in which the hydrocarbon is used as the reducing agent. The electronic control unit may be configured to execute the unburned fuel addition by controlling the fuel addition device as the amount-increasing processing such that the amount of the unburned fuel added by the fuel addition device is the calculated sum of the amounts of the unburned fuels. According to this aspect, the increase in the amount of the hydrocarbon in the exhaust gas flowing into the ammonia slip catalyst device is further ensured even in the case where the front-stage oxidation catalyst device is provided.

In the exhaust gas control apparatus according to the aspect described above, the addition of the unburned fuel may also be performed by fuel addition to the exhaust gas by the fuel adding valve with the fuel adding valve installed on the exhaust passage used as adding means. In addition, the addition of the unburned fuel may also be performed by an injector injecting the fuel into the combustion chamber being used as the adding means and based on fuel injection into the combustion chamber in an exhaust stroke by the injector.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic drawing illustrating configurations of an intake system and an exhaust system of a diesel engine to which an exhaust gas control apparatus according to a first embodiment is applied;
FIG. 2 is a flowchart of an amount-increasing processing routine that is executed in the exhaust gas control apparatus according to the first embodiment;
FIG. 3 is a graph illustrating relationships of an amount-increasing processing execution determination value that is used for an amount-increasing processing execution determination in the amount-increasing processing routine to an engine rotation speed and a fuel injection quantity;
FIG. 4 is a flowchart of an amount-increasing processing routine that is executed in an exhaust gas control apparatus according to a second embodiment;
FIG. 5 is a graph illustrating relationships of an amount-increasing processing execution determination value that is used for an amount-increasing processing execution determination in the amount-increasing processing routine to an exhaust gas flow rate and an SCR bed temperature;
FIG. 6 is a graph illustrating a relationship between an SCR inflow NOx amount and a calculated value of an unburned fuel addition amount during an amount-increasing processing pertaining to a case where the unburned fuel addition amount during the amount-increasing processing is calculated based on the SCR inflow NOx amount; and
FIG. 7 is a graph illustrating a relationship between the SCR inflow NOx amount and the calculated value of the unburned fuel addition amount during the amount-increasing processing pertaining to a case where the unburned fuel addition amount during the amount-increasing processing is calculated based on a NOx purification rate of an SCR device.

### DETAILED DESCRIPTION OF EMBODIMENTS

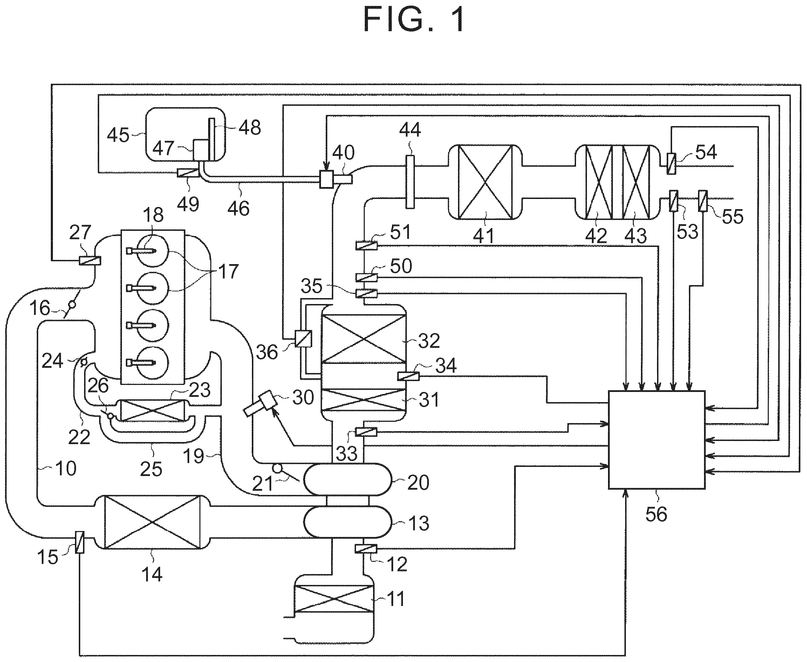

Hereinafter, a first embodiment of an exhaust gas control apparatus will be described in detail with reference to FIGS. 1 to 3. In an intake passage 10 of an internal combustion engine (diesel engine) to which the exhaust gas control apparatus according to this embodiment is applied, an air cleaner 11, an air flow meter 12, a compressor 13, an intercooler 14, an I/C outflow gas temperature sensor 15, a throttle valve 16, and an intake pressure sensor 27 are disposed in this order from its upstream side as illustrated in FIG. 1. The air cleaner 11 filters impurities in intake air. The air flow meter 12 detects a flow rate of the intake air flowing through the intake passage 10 (suctioned air amount). The compressor 13 pressurizes the intake air by being driven, and the intercooler 14 cools the intake air after the intake air passes through the compressor 13. The I/C outflow gas temperature sensor 15 detects a temperature of the intake air after the intake air passes through the intercooler 14. The throttle valve 16 adjusts the suctioned air amount in accordance with a change in an opening degree of the throttle valve 16. The intake pressure sensor 27 detects a pressure of the intake air at a part of the intake passage 10 on the downstream side of the throttle valve 16.

The intake passage 10 is connected to combustion chambers 17 of respective cylinders of the diesel engine on the downstream side of the throttle valve 16. Injectors 18 that inject a fuel are disposed in the respective combustion chambers 17 of the diesel engine. In each of the combustion chambers 17, combustion of an air-fuel mixture of the intake air introduced through the intake passage 10 and the fuel injected from the injector 18 is performed.

Exhaust gas (burned gas) resulting from the combustion of the air-fuel mixture in each of the combustion chambers 17 is released to the outside air through an exhaust passage 19. A turbine 20 is installed in the exhaust passage 19. The turbine 20 constitutes an exhaust turbine-type turbocharger with the compressor 13 that is disposed in the intake passage 10 and drives the compressor 13 by being rotated by a flow force of the exhaust gas flowing through the exhaust passage 19. In the exhaust passage 19, a variable nozzle 21 is installed on the upstream side of the turbine 20. The variable nozzle 21 allows an opening area of an exhaust gas blow port with respect to the turbine 20 to vary. A rotation speed of the turbine 20 is adjusted through the opening degree control of the variable nozzle 21.

In addition, an exhaust gas recirculation (EGR) system is disposed in the diesel engine. The EGR system allows some of the exhaust gas to recirculate into the intake air. The EGR system is provided with an EGR passage 22, an EGR cooler 23, and an EGR valve 24. The EGR passage 22 allows a part of the exhaust passage 19 on the upstream side of the turbine 20 and the part of the intake passage 10 on the downstream side of the throttle valve 16 to communicate with each other. The EGR cooler 23 cools the exhaust gas that is allowed to recirculate into the intake air through the EGR passage 22 (EGR gas). The EGR valve 24 adjusts a flow rate of the EGR gas. The EGR system is also provided with a bypass passage 25 and a bypass valve 26. The bypass passage 25 allows the EGR gas to flow by bypassing the EGR cooler 23, and the bypass valve 26 adjusts the flow rate of the EGR gas that bypasses the EGR cooler 23 through the bypass passage 25.

A configuration of the exhaust gas control apparatus according to this embodiment that is applied to the diesel engine which has the above-described configuration will be described below. A diesel particulate filter (DPF) system that collects particulate matter (PM) in the exhaust gas and a urea selective catalytic reduction (SCR) system that purifies the exhaust gas of NOx by selective reduction in which ammonia generated from urea water is used as a reducing agent are disposed in the exhaust gas control apparatus according to this embodiment.

The DPF system is provided with a fuel adding valve 30, a front-stage oxidation catalyst device 31, and a PM collection filter 32. The fuel adding valve 30 is installed at a part of the exhaust passage 19 on the upstream side of the turbine 20. In this embodiment, the fuel adding valve 30 is adding means for adding the fuel (unburned fuel) into the exhaust gas (burned gas) flowing through the exhaust passage 19. The front-stage oxidation catalyst device 31 is a catalyst device in which an oxidation catalyst is supported. The front-stage oxidation catalyst device 31 is installed at a part of the exhaust passage 19 on the downstream side of the turbine 20 and on the upstream side of the PM collection filter 32. The PM collection filter 32 is a filter that captures the PM in the exhaust gas. The front-stage oxidation catalyst device 31 oxidizes a soluble organic fraction (SOF) component of the PM and oxidizes nitrogen monoxide (NO) in the exhaust gas to generate nitrogen dioxide (NO2) required for a continuous regeneration of the PM collection filter 32. During a forced regeneration of the PM collection filter 32, the front-stage oxidation catalyst device 31 raises a temperature of the PM collection filter 32 to a temperature required for PM combustion by oxidizing hydrocarbon (HC) in the fuel added by the fuel adding valve 30 and raising a temperature of the exhaust gas by heat generation resulting from the oxidation reaction. An oxidation catalyst is supported in the PM collection filter 32 as well, and this oxidation catalyst contributes to the combustion of the PM.

In addition, the DPF system is provided with the following sensors for detecting states of the exhaust gas in respective portions of the system. At a part of the exhaust passage 19 on the upstream side of the front-stage oxidation catalyst device 31, an inflow gas temperature sensor 33 is installed to detect the temperature of the exhaust gas flowing into the front-stage oxidation catalyst device 31 (DOC inflow gas temperature). In addition, a middle gas temperature sensor 34 that detects the temperature of the exhaust gas flowing into the PM collection filter 32 (SCR middle gas temperature) is installed at a part of the exhaust passage 19 between the front-stage oxidation catalyst device 31 and the PM collection filter 32. Furthermore, an outflow gas temperature sensor 35 that detects the temperature of the exhaust gas flowing out from the PM collection filter 32 (SCR outflow gas temperature) is installed at a part of the exhaust passage 19 on the downstream side of the PM collection filter 32. Furthermore, a differential pressure sensor 36 that detects a difference between pressures of the exhaust gas in front of and behind the PM collection filter 32 is installed at a part of the exhaust passage 19 where the PM collection filter 32 is installed.

The urea SCR system is provided with a urea adding valve 40, two, front and rear, SCR devices, that is, a front-stage SCR device 41 and a rear-stage SCR device 42, and an ammonia slip catalyst (ASC) device 43. The urea adding valve 40 is installed at the part of the exhaust passage 19 on the downstream side of the PM collection filter 32 and adds the urea water to the exhaust gas. The front-stage SCR device 41 and the rear-stage SCR device 42 are selective reduction-type catalyst devices that reduce nitrogen oxide in the exhaust gas by using, as the reducing agent, the ammonia which is generated from the urea through exhaust heat-based hydrolysis. The front-stage SCR device 41 is installed at a part of the exhaust passage 19 on the downstream side of the urea adding valve 40, and the rear-stage SCR device 42 is installed at a part of the exhaust passage 19 on the downstream side of the front-stage SCR device 41. The ASC device 43 is installed at a part of the exhaust passage 19 on the downstream side of the rear-stage SCR device 42. An oxidation catalyst is supported in the ASC device 43. An action of this oxidation catalyst causes the ASC device 43 to oxidize the ammonia slipping through and flowing out from the front-stage and rear-stage SCR devices (41, 42). A dispersion plate 44 is installed at a part of the exhaust passage 19 between the urea adding valve 40 and the front-stage SCR device 41 in order to disperse the urea water added by the urea adding valve 40 into the exhaust gas.

The urea water that is added to the exhaust gas by the urea adding valve 40 is stored in a urea water tank 45. The urea water tank 45 is connected to the urea adding valve 40 through a heater-attached pipe 46. A urea pump 47 is installed in the urea water tank 45. The urea water in the urea water tank 45 is pumped up by the urea pump 47, and then the urea water is sent to the urea adding valve 40 through the pipe 46. A urea water level sensor 48 is disposed in the urea water tank 45 in order to detect a remaining amount of the urea water in the urea water tank 45. In addition, a urea water temperature sensor 49 that detects a temperature of the urea water which is sent to the urea adding valve 40 is installed on the pipe 46.

The urea SCR system is provided with the following sensors for detecting the states of the exhaust gas in respective portions of the system. An inflow NOx sensor 50 and an air-fuel ratio sensor 51 are installed at a part of the exhaust passage 19 between the PM collection filter 32 and the urea adding valve 40. The inflow NOx sensor 50 detects the amount of the NOx in the exhaust gas flowing into the front-stage SCR device 41 (SCR inflow NOx amount). The air-fuel ratio sensor 51 generates an output depending on an oxygen/unburned component concentration of the exhaust gas, and this output is used so that an air-fuel ratio of the air-fuel mixture burned in the combustion chamber 17 is discerned. An outflow NOx sensor 53, a post-ASC gas temperature sensor 54, and a PM sensor 55 are installed at a part of the exhaust passage 19 on the downstream side of the ASC device 43. The outflow NOx sensor 53 detects the amount of the NOx in the exhaust gas flowing out from the ASC device 43 and discharged to the outside air (ASC outflow NOx amount). The post-ASC gas temperature sensor 54 detects the temperature of the exhaust gas flowing out from the ASC device 43 (ASC outflow gas temperature). The PM sensor 55 detects the amount of the PM flowing out from the ASC device 43 and released to the outside air.

In this exhaust gas control apparatus, the fuel addition by the fuel adding valve 30 and the urea water addition by the urea adding valve 40 are controlled by an electronic control unit 56. The electronic control unit 56 is provided with a central calculation processing device that performs a calculation processing for control, a read-only memory that stores a program and data for control, a readable and writable memory that temporarily stores a result of the calculation by the central calculation processing device and a result of the detection by each sensor, an input port for receiving an external signal, and an output port for transmitting a signal to the outside. Each of the sensors described above is connected to the input port of the electronic control unit 56. The fuel adding valve 30 and the urea adding valve 40 are connected to the output port of the electronic control unit 56. The electronic control unit 56 controls the addition of the fuel and the urea water to the exhaust gas by controlling the driving of the fuel adding valve 30 and the urea adding valve 40.

In this exhaust gas control apparatus, the front-stage oxidation catalyst device 31 and the PM collection filter 32 correspond to additional, oxidation catalyst-supported, catalyst devices that are disposed at a part of the exhaust passage 19 on the upstream side of the selective reduction-type catalyst devices (front-stage SCR device 41 and rear-stage SCR device 42). In this exhaust gas control apparatus, in addition, the electronic control unit 56 that controls the addition of the fuel (unburned fuel) to the exhaust gas (burned gas) with the fuel adding valve 30 corresponds to an addition control unit.

The electronic control unit 56 controls the amount of the fuel addition by the fuel adding valve 30 in accordance with the states of the exhaust gas, temperature states of the front-stage oxidation catalyst device 31 and the PM collection filter 32, and the like so that the unburned fuel in an amount that is required for the combustion of the PM captured by the PM collection filter 32 is supplied to the front-stage oxidation catalyst device 31 and the PM collection filter 32. In addition, the electronic control unit 56 controls the amount of the urea water addition by the urea adding valve 40 in accordance with the states of the exhaust gas, temperature states of the SCR devices (41, 42) and the ASC device 43, and the like so that the ammonia in an amount that is required for the NOx discharged from the combustion chambers 17 to be removed by the SCR devices (41, 42) is supplied to the SCR devices (41, 42).

Furthermore, the electronic control unit 56 performs an amount-increasing processing for increasing the amount of the HC in the exhaust gas flowing into the ASC device 43 when the amount of the NOx flowing out from the SCR devices (41, 42) cannot be reduced to a desired amount with respect to the amount of the NOx flowing into the SCR devices (41, 42). Hereinafter, the amount-increasing processing in the exhaust gas control apparatus according to this embodiment will be described in detail.

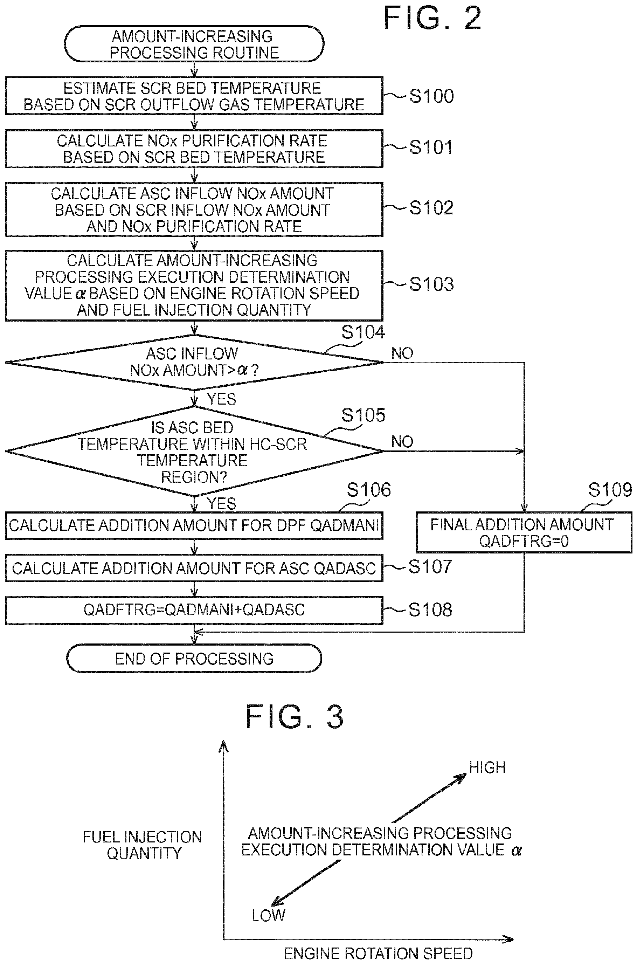

FIG. 2 shows a flowchart of an amount-increasing processing routine that is executed by the electronic control unit 56 for the execution of the amount-increasing processing. The electronic control unit 56 repeatedly executes the processing according to this routine at a specified control cycle while the diesel engine is in operation.

In Step S100, which is the first step following the initiation of the processing according to this routine, a catalyst bed temperature of the SCR devices (41, 42) (SCR bed temperature TSCR) is obtained based on estimation from a value of the SCR outflow gas temperature detected by the outflow gas temperature sensor 35. Then, in Step S101, a NOx purification rate of the SCR devices (41, 42) is calculated by estimation based on the SCR bed temperature TSCR. The NOx purification rate is a ratio of a NOx reduction amount of the front-stage and rear-stage SCR devices (41, 42) to the SCR inflow NOx amount. Then, in Step S102, the amount of the NOx in the exhaust gas flowing out from the rear-stage SCR device 42 and flowing into the ASC device 43 (ASC inflow NOx amount) is calculated by a value of the SCR inflow NOx amount detected by the inflow NOx sensor 50 being multiplied by the calculated value of the NOx purification rate. In substance, the ASC inflow NOx amount that is calculated in this manner is equal to the amount of the NOx flowing out from the SCR devices (41, 42) (SCR outflow NOx amount).

Subsequently, in Step S103, an amount-increasing processing execution determination value α is calculated from an engine rotation speed and a fuel injection quantity. The amount-increasing processing execution determination value α is calculated to become a maximum value within a range of a value that can be taken by the ASC inflow NOx amount at each operation point of the diesel engine specified by the engine rotation speed and the fuel injection quantity in a case where a required amount of the urea is supplied. Accordingly, provided that the actual ASC inflow NOx amount exceeds the amount-increasing processing execution determination value α, a larger-than-expected amount of NOx flows into the ASC device 43 without being removed by the SCR devices (41, 42), that is, the ASC inflow NOx amount (SCR outflow NOx amount) is not reduced to the desired amount with respect to the SCR inflow NOx amount. In this embodiment, the amount-increasing processing execution determination value α that is calculated from the engine rotation speed and the fuel injection quantity is the desired amount.

FIG. 3 shows an example of how the amount-increasing processing execution determination value α is set. When the diesel engine is in high-speed and high-load operation, the exhaust gas flow rate increases and the amount of the NOx contained in the exhaust gas increases as well, and thus the ASC inflow NOx amount increases even if a NOx purification capacity the SCR devices (41, 42) is sufficiently ensured. In the example in this drawing, in contrast, the amount-increasing processing execution determination value α is set to increase as the engine rotation speed increases or the fuel injection quantity increases.

Then, in Step S104, it is determined whether or not the calculated value of the ASC inflow NOx amount exceeds the amount-increasing processing execution determination value α. The processing proceeds to Step S105 when it is determined that the calculated value of the ASC inflow NOx amount exceeds the amount-increasing processing execution determination value α and the SCR outflow NOx amount (ASC inflow NOx amount) is not reduced to the desired amount with respect to the SCR inflow NOx amount as described above (YES). When it is determined that the calculated value of the ASC inflow NOx amount does not exceed the amount-increasing processing execution determination value α and the SCR outflow NOx amount (ASC inflow NOx amount) is reduced to the desired amount with respect to the SCR inflow NOx amount (NO), a value of a final addition amount QADFTRG is set to "0" in Step S109, and then the processing of the current session of this routine is terminated.

After the termination of the processing of this routine, the electronic control unit 56 commands the fuel adding valve 30 to carry out fuel addition equivalent to the final addition amount QADFTRG set in the processing of this routine. Accordingly, when the value of the final addition amount QADFTRG is set to "0", the fuel addition by the fuel adding valve 30 is not performed.

After the processing proceeds to Step S105, it is determined in Step S105 whether or not a catalyst bed temperature of the ASC device 43 (ASC bed temperature TASC) is within a HC-SCR-allowed temperature region. The HC-SCR-allowed temperature region is a temperature region where the ASC device 43 can reduce the NOx in the exhaust gas by selective catalytic reduction in which the hydrocarbon (HC) is used as the reducing agent. The processing proceeds to Step S106 provided that the ASC bed temperature TASC is within the HC-SCR-allowed temperature region (YES). Provided that the ASC bed temperature TASC is not within the HC-SCR-allowed temperature region (NO), the value of the final addition amount QADFTRG is set to "0" in Step S109 described above, and then the processing of the current session of this routine is terminated. In this embodiment, a value of an ASC outflow gas temperature detected by the post-ASC gas temperature sensor 54 is used as the ASC bed temperature TASC.

After the processing proceeds to Step S106, a value of an addition amount for the DPF QADMANI is calculated in Step S106 from a value of an ODC inflow gas temperature detected by the inflow gas temperature sensor 33 and the value of the SCR inflow NOx amount detected by the inflow NOx sensor 50. The value of the addition amount for the DPF QADMANI shows the amount of fuel addition that is required for the HC in an amount which is used in HC selective catalytic reduction of the NOx in the front-stage oxidation catalyst device 31 and the PM collection filter 32 to be added to the exhaust gas. A catalyst (such as platinum) capable of the NOx removal based on the HC selective catalytic reduction is supported in the front-stage oxidation catalyst device 31 and the PM collection filter 32 as well, and a HC selective catalytic reduction reaction regarding the NOx occurs provided that a sufficient amount of the HC is present in the exhaust gas flowing inside. The calculated value of the addition amount for the DPF QADMANI increases as the SCR inflow NOx amount increases or the DOC inflow gas temperature approaches a temperature at which the HC selective catalytic reduction reaction in the front-stage oxidation catalyst device 31 and the PM collection filter 32 is most activated.

Of the unburned fuel added to the exhaust gas by the fuel adding valve 30, the portion that is equivalent to the addition amount for the DPF QADMANI is consumed by the front-stage oxidation catalyst device 31 and the PM collection filter 32. Accordingly, the unburned fuel in an amount that exceeds the addition amount for the DPF QADMANI is required to be added for the unburned fuel to be allowed to reach the ASC device 43. The amount of the unburned fuel that reaches the ASC device 43 at this time is an amount which is obtained by subtracting the addition amount for the DPF QADMANI from the amount of the unburned fuel added by the fuel adding valve 30.

Subsequently, in Step S107, a value of an addition amount for the ASC QADASC is calculated from the ASC bed temperature TASC and the ASC inflow NOx amount. This calculation is performed such that the amount of the HC contained in the unburned fuel equivalent to the value of the addition amount for the ASC QADASC is the smaller one of two amounts, one being the amount of the HC that is required for the selective catalytic reduction of the NOx equivalent to the ASC inflow NOx amount and the other being the amount of the HC that is required for the selective catalytic reduction of the maximum amount of the NOx which can be removed by the ASC device 43 at the current ASC bed temperature TASC.

Then, in Step S108, a value that is obtained by adding the addition amount for the DPF QADMANI to the addition amount for the ASC QADASC is set to the value of the final addition amount QADFTRG. Then, the processing of the current session of this routine is terminated.

As described above, the calculated value of the addition amount for the DPF QADMANI increases as the SCR inflow NOx amount increases. In addition, at the same NOx purification rate of the SCR devices (41, 42), the ASC inflow NOx amount increases as the SCR inflow NOx amount increases, and the calculated value of the addition amount for the ASC QADASC increases as the ASC inflow NOx amount increases and the amount of the HC required for the selective catalytic reduction increases. Accordingly, the value of the final addition amount QADFTRG at this time is set to increase as the SCR inflow NOx amount increases.

At the same SCR inflow NOx amount, the ASC inflow NOx amount increases as the NOx purification rate of the SCR devices (41, 42) decreases, and the calculated value of the addition amount for the ASC QADASC increases as the ASC inflow NOx amount increases and the amount of the HC required for the selective catalytic reduction increases. Accordingly, the value of the final addition amount QADFTRG at this time is set to increase as the NOx purification rate of the SCR devices (41, 42) decreases.

At this time, a value that exceeds "0" is set to the value of the final addition amount QADFTRG, and thus fuel addition from the fuel adding valve 30 equivalent to the value of the final addition amount QADFTRG is carried out after the termination of the processing of this routine. In other words, in this increase processing routine, Step S105 to Step S108 is a processing corresponding to an increase processing.

As described above, the processing according to this routine described above is repeatedly executed at a specified control cycle. During the repeated execution of this routine, the amount-increasing processing continues insofar as the processing of Step S105 to Step S108 continues to be performed as a result of this routine. During the continuation of the amount-increasing processing, the amount-increasing processing is stopped when the processing for setting the value of the final addition amount QADFTRG to "0" in Step S109 is performed as a result of this routine. In other words, the amount-increasing processing is stopped when the ASC inflow NOx amount (SCR outflow NOx amount) becomes equal to or larger than the amount-increasing processing execution determination value α (S104: NO) or when the ASC bed temperature TASC deviates from the HC-SCR-allowed temperature region (S105: NO) during the continuation of the amount-increasing processing.

An effect of the exhaust gas control apparatus according to this embodiment will be described below. The urea water addition amount needs to be increased for the NOx purification capacity of the SCR devices (41, 42) to be increased. However, the SCR devices (41, 42) are limited in ammonia adhesion amount, and an excessive increase in the urea water addition amount causes ammonia in an amount exceeding the handling capacity of the ASC device 43 to be desorbed from the SCR devices (41, 42), which results in ammonia discharge to the outside air, that is, an ammonia slip. Accordingly, the urea water addition amount needs to be limited to a level entailing no ammonia desorption. When a large amount of the NOx is discharged, the urea water in an amount with which the discharged NOx can be fully removed cannot be added.

When the diesel engine is subject to rapid acceleration from an idle operation or a low-speed operation and the amount of the NOx discharge from the combustion chambers 17 rapidly increases, the NOx removal might be insufficient with the selective catalytic reduction reaction in the SCR devices (41, 42) not following even in the event of an increase in the urea water addition amount in accordance with the increase in the NOx discharge from the combustion chambers 17. At this time, in addition, surplus ammonia is desorbed from the SCR devices (41, 42). A rise in the exhaust gas temperature is subject to a delay with respect to the NOx increase at this time, and thus the ammonia slip might occur with the ASC device 43 not capable of fully functioning to oxidize the ammonia. Accordingly, in this case, the urea addition amount cannot be increased in accordance with the NOx increase for ammonia slip prevention.

In a case where a sufficient amount of the urea water cannot be added with respect to the amount of the NOx discharged from the combustion chambers 17 as in these cases, the SCR outflow NOx amount (ASC inflow NOx amount) cannot be reduced to the desired amount with respect to the SCR inflow NOx amount. In this case, the amount of the NOx in the exhaust gas passing through the SCR devices (41, 42) and flowing into the ASC device 43 without being purified (ASC inflow NOx amount) increases.

At this time, in the exhaust gas control apparatus according to this embodiment, the amount-increasing processing is executed on a condition that the ASC bed temperature TASC is within the HC-SCR-allowed temperature region upon the ASC inflow NOx amount increasing and exceeding the amount-increasing processing execution determination value α. Then, the unburned fuel is added to the exhaust gas (burned gas) by the fuel adding valve 30 that is installed on the exhaust passage 19. This addition of the unburned fuel to the exhaust gas causes the amount of the HC in the exhaust gas to be increased by the amount of the HC contained in the unburned fuel, and the amount of the HC in the exhaust gas flowing into the ASC device 43 is increased. Provided that the ASC bed temperature TASC at this time is within the HC-SCR-allowed temperature region, the selective catalytic reduction reaction of the NOx occurs in the ASC device 43 with the HC in the exhaust gas flowing in used as the reducing agent, and thus the amount of the NOx removed by the ASC device 43 increases provided that the amount of the HC in the exhaust gas flowing into the ASC device 43 is increased. Accordingly, the execution of the amount-increasing processing causes the amount of the NOx removed by the ASC device 43 to be increased even in a state where the ASC inflow NOx amount is large, and thus the NOx discharge to the outside air is suppressed.

An oxidation catalyst is also supported in the front-stage oxidation catalyst device 31 and the PM collection filter 32, which are disposed at the part of the exhaust passage 19 on the upstream side of the SCR devices (41, 42), and the selective catalytic reduction reaction of the NOx using the HC in the exhaust gas as the reducing agent occurs in the front-stage oxidation catalyst device 31 and the PM collection filter 32 as well. In the amount-increasing processing, the amount of the unburned fuel containing the HC equivalent to the consumption during the selective catalytic reduction reaction in the front-stage oxidation catalyst device 31 and the PM collection filter 32 is calculated as the addition amount for the DPF QADMANI. In addition, the amount of the unburned fuel containing the HC in an amount to be supplied to the ASC device 43 is calculated as the addition amount for the ASC QADASC. Then, the unburned fuel that is equivalent in amount to a total of the addition amount for the DPF QADMANI and the addition amount for the ASC QADASC (final addition amount QADFTRG) is added. Accordingly, during the selective catalytic reduction reaction in the front-stage oxidation catalyst device 31 and the PM collection filter 32, an amount of the HC contained in the unburned fuel equivalent to the addition amount for the ASC QADASC becomes a surplus, and this surplus HC flows into the ASC device 43.

The amount-increasing processing is stopped when the ASC inflow NOx amount becomes equal to or smaller than the amount-increasing processing execution determination value α and the SCR devices (41, 42) become capable of sufficient NOx removal on their own. Likewise, the amount-increasing processing is stopped when the ASC bed temperature TASC deviates from the HC-SCR temperature region and the ASC device 43 becomes incapable of sufficient NOx removal despite the continuation of the amount-increasing processing.

The exhaust gas control apparatus according to this embodiment described above can achieve the following effects.
(1) When the ASC inflow NOx amount is not reduced to the desired amount with respect to the SCR inflow NOx amount, the amount-increasing processing for increasing the amount of the HC in the exhaust gas flowing into the ASC device 43 is performed through the execution of the unburned fuel addition to the exhaust gas by the fuel adding valve 30 on the condition that the ASC bed temperature TASC is within the HC-SCR-allowed temperature region. Accordingly, when the ASC device 43 is in a temperature state that allows the NOx to be removed by the HC selective reduction, the NOx discharge to the outside air can be suppressed even when the SCR outflow NOx amount cannot be reduced to the desired amount with respect to the SCR inflow NOx amount.
(2) The amount-increasing processing is stopped when the ASC inflow NOx amount becomes equal to or smaller than the amount-increasing processing execution determination value α during the execution of the amount-increasing processing. Accordingly, an unnecessary continuation of the amount-increasing processing does not occur in a state where the NOx can be sufficiently removed even without the amount-increasing processing being performed. Accordingly, fuel consumption attributable to an unnecessary amount-increasing processing is suppressed.
(3) The amount-increasing processing is stopped when the ASC bed temperature TASC deviates from the HC-SCR temperature region during the execution of the amount-increasing processing. Accordingly, an unnecessary continuation of the amount-increasing processing does not occur in a state where the NOx removal by the HC selective catalytic reduction in the ASC device 43 is not performed despite the amount-increasing processing being performed. Accordingly, fuel consumption attributable to an unnecessary amount-increasing processing is suppressed.
(4) As the amount of the NOx flowing into the front-stage SCR device 41 increases, the fuel addition amount increased in the amount-increasing processing can be increased and the amount of the NOx removed by the HC selective catalytic reduction in the ASC device 43 can be increased. Accordingly, the amount of the NOx discharge to the outside air can be appropriately suppressed even after an increase in the amount of the NOx flowing into the front-stage SCR device 41.
(5) The fuel addition amount (addition amount for the DPF QADMANI) that is required for the HC in an amount to be consumed in the selective catalytic reduction reaction of the NOx in the front-stage oxidation catalyst device 31 and the PM collection filter 32 to be added to the exhaust gas is calculated separately from the fuel addition amount (addition amount for the ASC QADASC) that is required for the HC in an amount required to be supplied to the ASC device 43 to be added to the exhaust gas. Then, during the execution of the amount-increasing processing, the fuel addition equivalent in amount to the total is performed. Accordingly, the HC selective catalytic reduction of the NOx in the front-stage oxidation catalyst device 31 and the PM collection filter 32 is sure to result in the surplus HC, and this surplus HC flows into the ASC device 43. Accordingly, a required amount of the HC can be more reliably supplied to the ASC device 43. Eventually, the NOx removal by the HC selective catalytic reduction in the ASC device 43 can be more reliably performed.

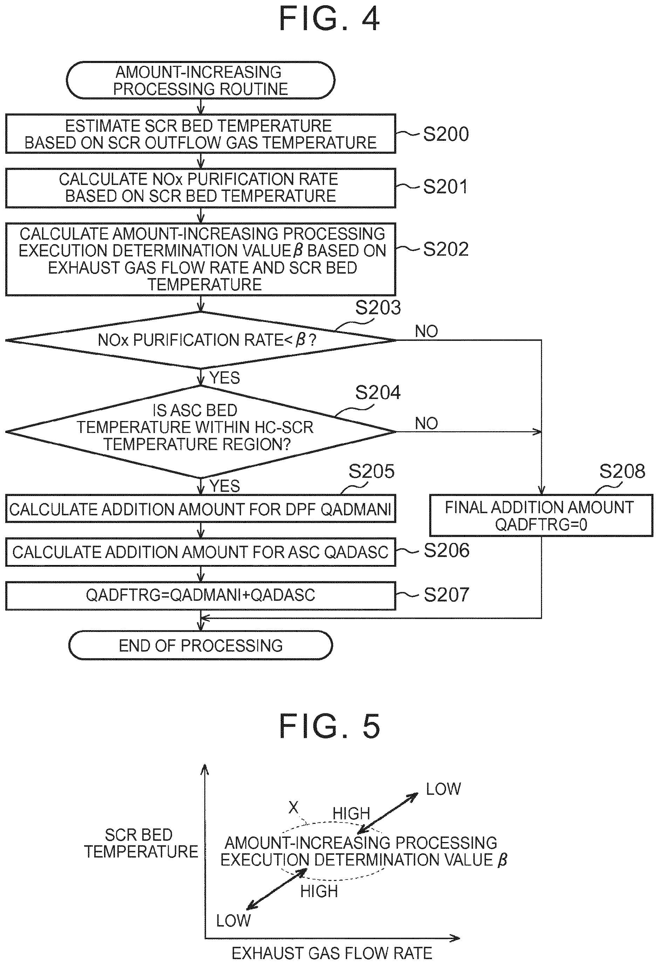

Hereinafter, a second embodiment of the exhaust gas control apparatus will be described in detail with reference to both FIGS. 4 and 5. The same reference numerals will be used to refer to configurations common to the first and second embodiments, and detailed description thereof will be omitted herein.

In the amount-increasing processing routine of the exhaust gas control apparatus according to the first embodiment, whether or not the SCR outflow NOx amount is in the state of not being reduced to the desired amount with respect to the SCR inflow NOx amount is determined based on the amount of the NOx in the exhaust gas passing through the SCR devices (41, 42), that is, the ASC inflow NOx amount. In the second embodiment, however, this determination is performed based on the NOx purification rate of the SCR devices (41, 42).

FIG. 4 shows a flowchart of the amount-increasing processing routine that is executed by the electronic control unit 56 in the exhaust gas control apparatus according to this embodiment. The electronic control unit 56 repeatedly executes the processing according to this routine at a specified control cycle during the execution of exhaust gas fuel addition. After the termination of the processing according to this routine, the electronic control unit 56 commands the fuel adding valve 30 to carry out fuel addition equivalent to the value of the final addition amount QADFTRG set in this processing.

In Step S200, which is the first step following the initiation of the processing according to this routine, the SCR bed temperature TSCR is obtained by estimation based on the value of the SCR outflow gas temperature detected by the outflow gas temperature sensor 35. In addition, in Step S201, the NOx purification rate of the SCR devices (41, 42) is obtained by estimation based on the calculated SCR bed temperature TSCR.

Then, in Step S202, a value of an amount-increasing processing execution determination value β is calculated from the exhaust gas flow rate and the SCR bed temperature TSCR. Herein, the exhaust gas flow rate (mass flow rate) is obtained by calculation as a sum of a value of the suctioned air amount detected by the air flow meter 12 (mass flow rate) and the fuel injection quantity from the injectors 18 (integrated value of the mass of the fuel injected per unit time).

At this time, the amount-increasing processing execution determination value β is calculated to become a minimum value within a range of a value that can be taken by the NOx purification rate in a case where a required amount of the urea is supplied and the SCR devices (41, 42) achieve an expected NOx purification capacity at each operation point specified by the exhaust gas flow rate and the SCR bed temperature TSCR. Accordingly, provided that the actual NOx purification rate is less than the amount-increasing processing execution determination value β, the NOx purification rate of the SCR devices (41, 42) is lower than expected. The SCR system is designed to suppress the NOx discharge to the outside air within an allowable range provided that the required amount of the urea is supplied to the SCR devices (41, 42). Accordingly, provided that the actual NOx purification rate is less than the amount-increasing processing execution determination value β, the amount of the urea water that can be added is smaller than the urea water addition amount which is required to allow the NOx purification rate to become at least the amount-increasing processing execution determination value β, which means the SCR outflow NOx amount is not reduced to the desired amount with respect to the SCR inflow NOx amount. In this embodiment, a value that is obtained by the amount-increasing processing execution determination value β being multiplied by the SCR inflow NOx amount is the desired amount.

FIG. 5 shows an example of how the amount-increasing processing execution determination value β is set. The NOx purification capacity of the SCR devices (41, 42) after the supply of the required amount of the urea changes depending on the SCR bed temperature TSCR. An increase in the exhaust gas flow rate causes an increase in the amount of the NOx contained in the exhaust gas. The NOx purification rate of the SCR devices (41, 42) changes depending on a balance between the amount of the NOx in the exhaust gas flowing in and the NOx purification capacity of the SCR devices (41, 42). A region X in the drawing is a region where the NOx purification rate increases as a result of the balance in the case of the supply of the required amount of the urea. In the example that is illustrated in this drawing, the value of the amount-increasing processing execution determination value β is set to decrease in accordance therewith as the value of the amount-increasing processing execution determination value β becomes further away from the region X.

In Step S203, after the calculation of the amount-increasing processing execution determination value β, it is determined whether or not the current NOx purification rate that is calculated in Step S201 falls short of the amount-increasing processing execution determination value β. The processing proceeds to Step S204 when it is determined that the NOx purification rate falls short of the amount-increasing processing execution determination value β and the SCR outflow NOx amount is not reduced to the desired amount with respect to the SCR inflow NOx amount (YES). When it is determined that the NOx purification rate is at least the amount-increasing processing execution determination value β and the SCR outflow amount is reduced to the desired amount with respect to the SCR inflow NOx amount (NO), the value of the final addition amount QADFTRG is set to "0" in Step S208, and then the processing of the current session of this routine is terminated.

After the processing proceeds to Step S204, it is determined in Step S204 whether or not the ASC bed temperature TASC is within the HC-SCR-allowed temperature region. The processing proceeds to Step S205 provided that the ASC bed temperature TASC is within the HC-SCR-allowed temperature region (YES). Provided that the ASC bed temperature TASC is not within the HC-SCR-allowed temperature region (NO), the value of the final addition amount QADFTRG is set to "0" in Step S208 described above, and then the processing of the current session of this routine is terminated.

After the processing proceeds to Step S205, the addition amount for the DPF QADMANI is calculated in Step S205 based on the value of the DOC inflow gas temperature detected by the inflow gas temperature sensor 33 and the value of the SCR inflow NOx amount detected by the inflow NOx sensor 50. Then, in Step S206, the addition amount for the ASC QADASC is calculated based on the ASC bed temperature TASC and the ASC inflow NOx amount. Then, in Step S207, the value that is obtained by adding the addition amount for the DPF QADMANI to the addition amount for the ASC QADASC is set to the value of the final addition amount QADFTRG. Then, the processing of the current session of this routine is terminated. In this amount-increasing processing routine according to this embodiment, Step S205 to Step S207 is a processing corresponding to the increase processing.

As described above, the processing according to this routine is repeatedly executed at a specified control cycle. Accordingly, during the repeated execution of this routine, the amount-increasing processing continues insofar as the processing of Step S205 to Step S207 continues to be performed as a result of this routine. During the continuation of the amount-increasing processing, the amount-increasing processing is stopped when the processing for setting the value of the final addition amount QADFTRG to "0" in Step S208 is performed as a result of this routine. In other words, the amount-increasing processing is stopped when the NOx purification rate becomes at least the amount-increasing processing execution determination value β (S203: NO) or when the ASC bed temperature TASC deviates from the HC-SCR-allowed temperature region (S204: NO) during the continuation of the amount-increasing processing.

Even in the exhaust gas control apparatus according to this embodiment, the amount-increasing processing is executed on the condition that the ASC bed temperature TASC is within the HC-SCR temperature region when the SCR outflow amount is not reduced to the desired amount with respect to the SCR inflow NOx amount due to a limitation on the urea water addition for ammonia slip prevention or the like. The execution of the amount-increasing processing results in an increase in the amount of the HC in the exhaust gas flowing into the ASC device 43 through the addition of the unburned fuel to the exhaust gas (burned gas). As a result, the selective catalytic reduction reaction of the NOx in the ASC device 43 becomes more active, and the NOx discharge to the outside air is suppressed. Accordingly, the exhaust gas control apparatus according to this embodiment can achieve effects similar to those of the first embodiment.

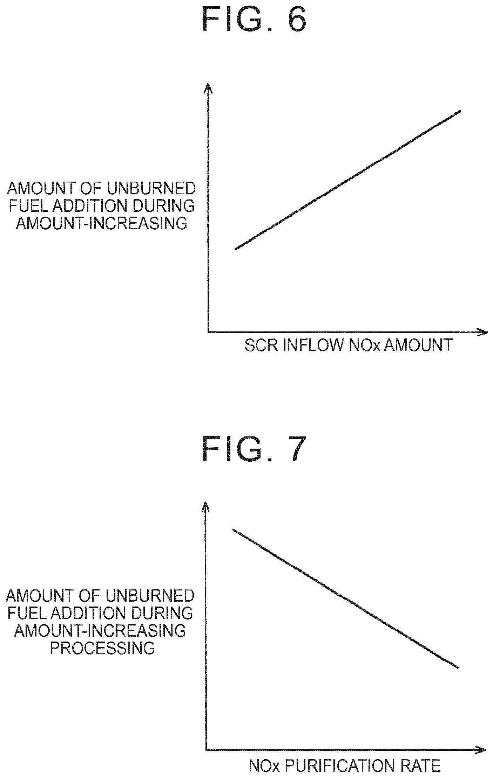

The above-described embodiments can be modified as follows. In the embodiments described above, the amount of the unburned fuel that reaches the ASC device 43 can be strictly controlled by the amount of the unburned fuel addition during the amount-increasing processing (final addition amount QADFTRG) being obtained as the sum of the addition amount for the DPF QADMANI and the addition amount for the ASC QADASC. However, the calculation of the amount of the unburned fuel addition during the amount-increasing processing may be performed by another method. For example, the amount of the unburned fuel addition during the amount-increasing processing (final addition amount QADFTRG) may be more simply calculated based on the SCR inflow NOx amount and the NOx purification rate of the SCR devices (41, 42). The ASC inflow NOx amount tends to increase as the SCR inflow NOx amount increases or as the NOx purification rate of the SCR devices (41, 42) decreases. Accordingly, in a case where the amount of the unburned fuel addition during the amount-increasing processing is calculated based on the SCR inflow NOx amount, it is desirable that the amount of the unburned fuel addition during the amount-increasing processing is increased as the SCR inflow NOx amount increases as illustrated in FIG. 6. In addition, in a case where the amount of the unburned fuel addition during the amount-increasing processing is calculated based on the NOx purification rate of the SCR devices (41, 42), it is desirable that the amount of the unburned fuel addition during the amount-increasing processing is increased as the NOx purification rate decreases as illustrated in FIG. 7. In this case, a relatively high NOx purification rate can be ensured by the overall SCR system including the SCR devices (41, 42) and the ASC device 43 despite a large SCR outflow NOx amount, and the NOx discharge to the outside air is appropriately suppressed.

·In the first embodiment, the amount-increasing processing is stopped when the ASC inflow NOx amount falls short of the amount-increasing processing execution determination value α during the execution of the amount-increasing processing. In the second embodiment, the amount-increasing processing is stopped when the NOx purification rate of the SCR devices (41, 42) becomes at least the amount-increasing processing execution determination value during the execution of the amount-increasing processing. In the first and second embodiments, the amount-increasing processing is also stopped when the ASC bed temperature TASC deviates from the HC-SCR-allowed temperature region during the execution of the amount-increasing processing. These conditions for stopping the amount-increasing processing may be appropriately changed. For example, the amount-increasing processing may be stopped at a point in time when a time limit is over after the initiation of the amount-increasing processing with the time limit set on an execution time of the amount-increasing processing or the amount-increasing processing may be stopped at a point in time when the total amount of the unburned fuel increased after the initiation of the amount-increasing processing reaches an amount limit with the limit set on the total amount of the unburned fuel increased during the amount-increasing processing.

·In the embodiments described above, the value that is detected by the post-ASC gas temperature sensor 54 is used as the ASC bed temperature TASC. However, a value that is estimated from the SCR bed temperature TSCR or the like may be used as the ASC bed temperature TASC as well.

·In the embodiments described above, the values of the amount-increasing processing execution determination values α, β are variably set in accordance with the engine rotation speed, the fuel injection quantity, the exhaust gas flow rate, and the SCR bed temperature TSCR. However, the variable setting of the values of the amount-increasing processing execution determination values α, β may also be performed based on another parameter which has a correlation with the NOx purification capacity of the SCR devices (41, 42). In addition, the amount-increasing processing execution determination values α, β may be fixed values as well.

·In the embodiments described above, the addition of the unburned fuel to the burned gas burned in the combustion chambers 17 is performed through the addition of the fuel to the exhaust gas by the fuel adding valve 30. However, the addition of the unburned fuel to the burned gas may also be performed through fuel injection into the combustion chamber 17 by the injector 18 during an exhaust stroke, that is, post-injection. In this case, the injector 18 is adding means for adding the unburned fuel to the burned gas that is present in the combustion chamber 17 in the exhaust stroke. The amount of the HC in the exhaust gas flowing into the ASC device 43 can be increased even in the event of the post-injection-based addition of the unburned fuel to the burned gas in the combustion chamber 17. Accordingly, the NOx discharge to the outside air can be suppressed, even when the SCR outflow amount cannot be reduced to the desired amount with respect to the SCR inflow NOx amount, insofar as the amount-increasing processing for increasing the amount of the HC in the exhaust gas flowing into the ASC device 43 is performed through the post-injection on the condition that the ASC bed temperature TASC is within the HC-SCR-allowed temperature region.

## Claims

1. An exhaust gas control apparatus for an internal combustion engine, the internal combustion engine including a combustion chamber (17) and an exhaust passage (19), the exhaust gas control apparatus comprising:
a urea adding valve (40) configured to add urea water to exhaust gas discharged from the combustion chamber (17) to the exhaust passage (19);
selective reduction-type catalyst devices (41, 42) configured to reduce nitrogen oxide in the exhaust gas by selective catalytic reduction in which ammonia generated from the urea water is used as a reducing agent;
an ammonia slip catalyst device (43) in which an oxidation catalyst is supported, the ammonia slip catalyst device (43) being placed on a downstream side of the selective reduction-type catalyst devices (41, 42), and the ammonia slip catalyst device (43) being configured to oxidize the ammonia flowing out from the selective reduction-type catalyst devices (41, 42);
a fuel addition device (30; 18) configured to add an unburned fuel to burned gas burned in the combustion chamber (17); **characterised by** an electronic control unit (56) comprising means to control the fuel addition device (30; 18) as an amount-increasing processing when the amount of the nitrogen oxide flowing out from the selective reduction-type catalyst devices (41, 42) is not reduced to a desired amount with respect to the amount of the nitrogen oxide flowing into the selective reduction-type catalyst devices (41, 42) and when a catalyst bed temperature of the ammonia slip catalyst device (43) is within a temperature region where the nitrogen oxide in the exhaust gas can be reduced in the ammonia slip catalyst device (43) by selective catalytic reduction in which unburned hydrocarbon added to the exhaust by the fuel addition device (30; 18) is used as a reducing agent, wherein the amount of the hydrocarbon in the exhaust gas flowing into the ammonia slip catalyst device (43) is increased based on the current catalyst bed temperature of the ammonia slip catalyst device (43) and the amount of nitrogen oxide flowing into the ammonia slip catalyst device (43).

2. The exhaust gas control apparatus according to claim 1,
wherein the electronic control unit (56) is configured to perform the amount-increasing processing by regarding a time when the amount of the nitrogen oxide in the exhaust gas passing through the selective reduction-type catalyst devices (41, 42) exceeds a specified value as a time when the amount of the nitrogen oxide flowing out from the selective reduction-type catalyst devices (41, 42) is not reduced to the desired amount with respect to the amount of the nitrogen oxide flowing into the selective reduction-type catalyst devices (41, 42).

3. The exhaust gas control apparatus according to claim 1,
wherein the electronic control unit (56) is configured to perform the amount-increasing processing by regarding a time when the amount of the urea water allowed to be added is smaller than an addition amount of the urea water required for a nitrogen oxide purification rate, a ratio of the amount of the nitrogen oxide reduced by the selective reduction-type catalyst devices (41, 42) to the amount of the nitrogen oxide flowing into the selective reduction-type catalyst devices (41, 42), to exceed a specified value as a time when the amount of the nitrogen oxide flowing out from the selective reduction-type catalyst devices (41, 42) is not reduced to the desired amount with respect to the amount of the nitrogen oxide flowing into the selective reduction-type catalyst devices (41, 42).

4. The exhaust gas control apparatus according to any one of claims 1 to 3,
wherein the electronic control unit (56) is configured to stop the amount-increasing processing when the amount of the nitrogen oxide in the exhaust gas passing through the selective reduction-type catalyst devices (41, 42) becomes equal to or smaller than a specified value while the amount-increasing processing is performed.

5. The exhaust gas control apparatus according to any one of claims 1 to 4,
wherein the electronic control unit (56) is configured to stop the amount-increasing processing when a nitrogen oxide purification rate, a ratio of the nitrogen oxide reduction amount in the selective reduction-type catalyst devices (41, 42) to the amount of an inflow of the nitrogen oxide into the selective reduction-type catalyst devices (41, 42), becomes at least a specified value while the amount-increasing processing is performed.

6. The exhaust gas control apparatus according to any one of claims 1 to 5,
wherein the electronic control unit (56) is configured to stop the amount-increasing processing when the bed temperature of the ammonia slip catalyst device (43) deviates from the temperature region while the amount-increasing processing is performed.

7. The exhaust gas control apparatus according to any one of claims 1 to 6,
wherein the electronic control unit (56) is configured to control the fuel addition device (30; 18) as the amount-increasing processing such that the amount of the unburned fuel addition increases as the amount of the nitrogen oxide flowing into the selective reduction-type catalyst devices (41, 42) increases.

8. The exhaust gas control apparatus according to any one of claims 1 to 7,
wherein the electronic control unit (56) is configured to control the fuel addition device (30; 18) as the amount-increasing processing such that the amount of the unburned fuel addition during the amount-increasing processing increases as a nitrogen oxide purification rate, a ratio of the amount of the nitrogen oxide reduced by the selective reduction-type catalyst devices (41, 42) to the amount of the nitrogen oxide flowing into the selective reduction-type catalyst devices (41, 42), decreases.

9. The exhaust gas control apparatus according to any one of claims 1 to 8, further comprising:
a front-stage oxidation catalyst device (31) having an oxidation catalyst supported therein and placed in the exhaust passage further upstream than the selective reduction-type catalyst devices (41, 42),
wherein the electronic control unit (56) is configured to control the fuel addition device (30; 18) as the amount-increasing processing such that the amount of the unburned fuel added by the fuel addition device (30; 18) is an amount exceeding the amount of the unburned fuel required for supply into the exhaust gas of the hydrocarbon in an amount consumed in a nitrogen oxide reduction reaction based on selective catalytic reduction in the front-stage oxidation catalyst device (31) in which the hydrocarbon is used as a reducing agent.

10. The exhaust gas control apparatus according to claim 9,
wherein the electronic control unit (56) is configured to calculate a sum of the amount of the unburned fuel required for the supply into the exhaust gas of the hydrocarbon in an amount consumed in the nitrogen oxide reduction reaction based on the selective catalytic reduction in the front-stage oxidation catalyst device (31) in which the hydrocarbon is used as the reducing agent and the amount of the unburned fuel required for the supply into the exhaust gas of the hydrocarbon in an amount consumed in the nitrogen oxide reduction reaction based on the selective catalytic reduction in the ammonia slip catalyst device (43) in which the hydrocarbon is used as the reducing agent, the electronic control unit (56) being configured to execute the unburned fuel addition by controlling the fuel addition device (30; 18) as the amount-increasing processing such that the amount of the unburned fuel added by the fuel addition device (30; 18) is the calculated sum of the amounts of the unburned fuels.

11. The exhaust gas control apparatus according to any one of claims 1 to 10,
wherein the fuel addition device (30; 18) includes a fuel adding valve (30) installed on the exhaust passage (19), the fuel adding valve (30) being configured to add the fuel to the exhaust gas in the exhaust passage (19), and
wherein the electronic control unit (56) is configured to perform the addition of the unburned fuel by controlling the fuel adding valve (30).

12. The exhaust gas control apparatus according to any one of claims 1 to 10,
wherein the fuel addition device (30; 18) includes an injector (18) injecting the fuel into the combustion chamber (17), and
wherein the electronic control unit (56) is configured to add the unburned fuel by controlling the fuel injection into the combustion chamber in an exhaust stroke by the injector (18).

## Patentansprüche

1. Abgassteuervorrichtung für eine Verbrennungskraftmaschine, wobei die Verbrennungskraftmaschine eine Brennkammer (17) und einen Abgastrakt (19) beinhaltet, wobei die Abgassteuervorrichtung aufweist:
ein Ureabeigabeventil (40), das so konfiguriert ist, dass es dem Abgas, das aus der Brennkammer (17) des Abgastrakts (19) ausgestoßen wird, Ureawasser beigibt;
Selektivreduktionskatalysatorvorrichtungen (41, 42), die so konfiguriert sind, dass sie Stickoxid in dem Abgas durch Selektivreduktionskatalyse reduzieren, wobei Ammoniak, das aus dem Ureawasser erzeugt wird, als ein Reduktionsmittel verwendet wird;
eine Ammoniakschlupfkatalysatorvorrichtung (43), in der ein Oxidationskatalysator getragen ist, wobei die Ammoniakschlupfkatalysatorvorrichtung (43) auf einer Stromabwärtsseite der Selektivreduktionskatalysatorvorrichtungen (41, 42) platziert ist, und wobei die Ammoniakschlupfkatalysatorvorrichtung (43) so konfiguriert ist, dass sie das Ammoniak oxidiert, das aus den Selektivreduktionskatalysatorvorrichtungen (41, 42) strömt;
eine Kraftstoffbeigabevorrichtung (30; 18), die so konfiguriert ist, dass sie einen nicht verbrannten Kraftstoff dem verbrannten Gas beigibt, das in der Brennkammer (17) verbrannt wird;
**gekennzeichnet durch**
eine elektronische Steuereinheit (56), die eine Einrichtung aufweist, um die Kraftstoffbeigabevorrichtung (30; 18) als einen mengenerhöhenden Vorgang zu steuern, wenn die Menge an Stickoxid, die aus den Selektivreduktionskatalysatorvorrichtungen (41, 42) strömt, nicht auf eine gewünschte Menge mit Bezug auf die Menge des Stickoxids, die in die Selektivreduktionskatalysatorvorrichtungen (41, 42) strömt, reduziert wird, und wenn eine Katalysatorbetttemperatur der Ammoniakschlupfkatalysatorvorrichtung (43) innerhalb eines Temperaturbereichs liegt, in dem das Stickoxid in dem Abgas in der Ammoniakschlupfkatalysatorvorrichtung (43) durch Selektivreduktionskatalyse reduziert werden kann, wobei nicht verbrannter Kohlenwasserstoff, der durch die Kraftstoffbeigabevorrichtung (30; 18) dem Abgas beigegeben wird als ein Reduktionsmittel verwendet wird, wobei die Menge des Kohlenwasserstoffs in dem Abgas, die in die Ammoniakschlupfkatalysatorvorrichtung (43) strömt, auf Basis der gegenwärtigen Katalysatorbetttemperatur der Ammoniakschlupfkatalysatorvorrichtung (43) und der Menge an Stickoxid, die in die Ammoniakschlupfkatalysatorvorrichtung (43) strömt, erhöht wird.

2. Abgassteuervorrichtung nach Anspruch 1,
wobei die elektronische Steuereinheit (56) so konfiguriert ist, dass sie die mengenerhöhende Verarbeitung durchführt, indem eine Zeit, in der die Menge des Stickoxids in dem Abgas, das durch die Selektivreduktionskatalysatorvorrichtungen (41, 42) strömt, einen spezifischen Wert übersteigt, als eine Zeit angesehen wird, in der die Menge des Stickoxids, das aus den Selektivreduktionskatalysatorvorrichtungen (41, 42) strömt, nicht auf die gewünschte Menge in Bezug auf die Menge des Stickoxids reduziert wird, die in die Selektivreduktionskatalysatorvorrichtungen (41, 42) strömt.

3. Abgassteuervorrichtung nach Anspruch 1,
wobei die elektronische Steuereinheit (56) so konfiguriert ist, dass sie die mengenerhöhende Verarbeitung durchführt, indem eine Zeit, in der die Menge des Ureawassers, die beigegeben werden darf, geringer ist als eine Beigabemenge des Ureawassers, die für eine Stickoxidreinigungsrate benötigt wird, ein Verhältnis der Menge des Stickoxids, die durch die Selektivreduktionskatalysatorvorrichtungen (41, 42) auf die Menge des Stickoxids, die in die Selektivreduktionskatalysatorvorrichtungen (41, 42) strömt, reduziert wird, einen spezifischen Wert übersteigt, als eine Zeit angesehen wird, in der die Menge des Stickoxids, die aus den Selektivreduktionskatalysatorvorrichtungen (41, 42) strömt, nicht auf die gewünschte Menge in Bezug auf die Menge des Stickoxids reduziert wird, die in die Selektivreduktionskatalysatorvorrichtungen (41, 42) strömt.

4. Abgassteuervorrichtung nach einem der Ansprüche 1 bis 3,
wobei die elektronische Steuereinheit (56) so konfiguriert ist, dass sie die mengenerhöhende Verarbeitung stoppt, wenn die Menge des Stickstoffs in dem Abgas, die durch die Selektivreduktionskatalysatorvorrichtungen (41, 42) strömt, gleich oder kleiner als ein spezifischer Wert wird, während die mengenerhöhende Verarbeitung durchgeführt wird.

5. Abgassteuervorrichtung nach einem der Ansprüche 1 bis 4,
wobei die elektronische Steuereinheit (56) so konfiguriert ist, dass sie die mengenerhöhende Verarbeitung stoppt, wenn eine Stickoxidreinigungsrate, ein Verhältnis der Stickoxidreduktionsmenge in den Selektivreduktionskatalysatorvorrichtungen (41, 42) zu der Menge eines Stroms des Stickoxids in die Selektivreduktionskatalysatorvorrichtungen (41, 42) zumindest ein spezifischer Wert wird, während die mengenerhöhende Verarbeitung durchgeführt wird.

6. Abgassteuervorrichtung nach einem der Ansprüche 1 bis 5,
wobei die elektronische Steuereinheit (56) so konfiguriert ist, dass sie die mengenerhöhende Verarbeitung stoppt, wenn die Betttemperatur der Ammoniakschlupfkatalysatorvorrichtung (43) von dem Temperaturbereich abweicht, während die mengenerhöhende Verarbeitung durchgeführt wird.

7. Abgassteuervorrichtung nach einem der Ansprüche 1 bis 6,
wobei die elektronische Steuereinheit (56) so konfiguriert ist, dass sie die Kraftstoffbeigabevorrichtung (30; 18) als die mengenerhöhende Verarbeitung so steuert, dass die Beigabemenge von unverbranntem Kraftstoff in dem Maße zunimmt, in dem die Menge des Stickstoffs, die in die Selektivreduktionskatalysatorvorrichtungen (41, 42) strömt, zunimmt.

8. Abgassteuervorrichtung nach einem der Ansprüche 1 bis 7,
wobei die elektronische Steuereinheit (56) so konfiguriert ist, dass sie die Kraftstoffbeigabevorrichtung (30; 18) als die mengenerhöhende Verarbeitung steuert, so dass die Beigabemenge des unverbrannten Kraftstoffs während der mengenerhöhenden Verarbeitung in dem Maße zunimmt, in dem eine Stickoxidreinigungsrate zunimmt, und ein Verhältnis der Menge des Stickoxids, die durch die Selektivreduktionskatalysatorvorrichtungen (41, 42) auf die Menge des Stickoxids reduziert wird, die in die Selektivreduktionskatalysatorvorrichtungen (41, 42) strömt, abnimmt.

9. Abgassteuervorrichtung nach einem der Ansprüche 1 bis 8, ferner aufweisend:
eine Vorderstufenoxidationskatalysatorvorrichtung (31) mit einem Oxidationskatalysator, der darin getragen ist und weiter stromaufwärts in der Abgasleitung platziert ist als die Selektivreduktionskatalysatorvorrichtungen (41, 42),
wobei die elektronische Steuereinheit (56) so konfiguriert ist, dass sie die Kraftstoffbeigabevorrichtung (30; 18) als die mengenerhöhende Verarbeitung steuert, so dass die Menge des unverbrannten Kraftstoffs, der durch die Kraftstoffbeigabevorrichtung (30; 18) beigegeben wird, eine Menge ist, die die Menge des unverbrannten Kraftstoffs übersteigt, die für die Zufuhr in das Abgas des Kohlenwasserstoffs in einer Menge benötigt wird, die in einer Stickoxidreduktionsreaktion auf Basis der Selektivreduktionskatalyse in der Vorderstufenoxidationskatalysatorvorrichtung (31) verbraucht wird, in der der Kohlenwasserstoff als ein Reduktionsmittel verwendet wird.

10. Abgassteuervorrichtung nach Anspruch 9,
wobei die elektronische Steuereinheit (56) so konfiguriert ist, dass sie eine Summe der Menge des unverbrannten Kraftstoffs, die für die Zufuhr in das Abgas des Kohlenwasserstoffs in einer Menge benötigt wird, die in der Stickstoffreduktionsreaktion auf Basis der Selektivreduktionskatalyse in der Vorderstufenoxidationskatalysatorvorrichtung (31) verbraucht wird, in der der Kohlenwasserstoff als das Reduktionsmittel verwendet wird, und der Menge des unverbrannten Kraftstoffs, die für die Zufuhr in das Abgas des Kohlenwasserstoffs in einer Menge benötigt wird, die in der Stickoxidreduktionsreaktion auf Basis der Selektivreduktionskatalyse in der Ammoniakschlupfkatalysatorvorrichtung (43) verbraucht wird, in der der Kohlenwasserstoff als das Reduktionsmittel verwendet wird, berechnet, wobei die elektronische Steuereinheit (56) so konfiguriert ist, dass sie die Beigabe von unverbranntem Kraftstoff ausführt, indem sie die Kraftstoffbeigabevorrichtung (30; 18) als die mengenerhöhende Verarbeitung steuert, so dass die Menge des unverbrannten Kraftstoffs, der durch die Kraftstoffbeigabevorrichtung (30; 18) beigegeben wird, die berechnete Summe der Mengen der unverbrannten Kraftstoffe ist.

11. Abgassteuervorrichtung nach einem der Ansprüche 1 bis 10,
wobei die Kraftstoffbeigabevorrichtung (30; 18) ein Kraftstoffbeigabeventil (30) beinhaltet, das an der Abgasleitung (19) installiert ist, wobei das Kraftstoffbeigabeventil (30) so konfiguriert ist, dass es den Kraftstoff dem Abgas in der Abgasleitung (19) beigibt, und
wobei die elektronische Steuereinheit (56) so konfiguriert ist, dass sie die Beigabe des unverbrannten Kraftstoffs durch Steuern des Kraftstoffbeigabeventils (30) durchführt.

12. Abgassteuervorrichtung nach einem der Ansprüche 1 bis 10,
wobei die Kraftstoffbeigabevorrichtung (30; 18) einen Injektor (18) beinhaltet, der den Kraftstoff in die Brennkammer (17) einspritzt, und
wobei die elektronische Steuereinheit (56) so konfiguriert ist, dass sie den unverbrannten Kraftstoff durch Steuern der Kraftstoffeinspritzung in die Brennkammer durch den Injektor (18) in einem Auslasshub beigibt.

## Revendications

1. Appareil de commande de gaz d'échappement pour un moteur à combustion interne, le moteur à combustion interne comprenant une chambre de combustion (17) et un passage d'échappement (19), l'appareil de commande de gaz d'échappement comprenant :
une soupape d'ajout d'urée (40) configurée pour ajouter de l'eau d'urée au gaz d'échappement déchargé de la chambre de combustion (17) au passage d'échappement (19) ;
des dispositifs catalytiques de type à réduction sélective (41, 42) configurés pour réduire l'oxyde d'azote dans le gaz d'échappement par la réduction catalytique sélective dans laquelle l'ammoniac généré par l'eau d'urée est utilisé en tant qu'agent de réduction ;
un dispositif catalytique d'ammoniac à glissement (43) dans lequel un catalyseur d'oxydation est supporté, le dispositif catalytique d'ammoniac à glissement (43) étant placé sur un côté en aval des dispositifs catalytiques de type à réduction sélective (41, 42), et le dispositif catalytique d'ammoniac à glissement (43) étant configuré pour oxyder l'ammoniac sortant en s'écoulant des dispositifs catalytiques de type à réduction sélective (41, 42) ;
un dispositif d'ajout de combustible (30 ; 18) configuré pour ajouter un combustible non brûlé au gaz brûlé, brûlé dans la chambre de combustion (17) ; **caractérisé par** :
une unité de commande électronique (56) comprenant des moyens pour commander le dispositif d'ajout de combustible (30 ; 18) en tant que traitement d'augmentation de quantité lorsque la quantité d'oxyde d'azote sortant en s'écoulant des dispositifs catalytiques de type à réduction sélective (41, 42) n'est pas réduite à une quantité souhaitée par rapport à la quantité d'oxyde d'azote s'écoulant dans les dispositifs catalytiques de type à réduction sélective (41, 42) et lorsqu'une température de lit de catalyseur du dispositif catalytique d'ammoniac à glissement (43) est dans une région de température dans laquelle l'oxyde d'azote dans le gaz d'échappement peut être réduit dans le dispositif catalytique d'ammoniac à glissement (43) par la réduction catalytique sélective dans laquelle les hydrocarbures ajoutés à l'échappement par le dispositif d'ajout de combustible (30 ; 18) sont utilisés en tant qu'agent de réduction, dans lequel la quantité d'hydrocarbures dans le gaz d'échappement s'écoulant dans le dispositif catalytique d'ammoniac à glissement (43) est augmentée en fonction de la température de lit de catalyseur actuelle du dispositif catalytique d'ammoniac à glissement (43) et la quantité d'oxyde d'azote s'écoulant dans le dispositif catalytique d'ammoniac à glissement (43).

2. Appareil de commande de gaz d'échappement selon la revendication 1,
dans lequel l'unité de commande électronique (56) est configurée pour réaliser le traitement d'augmentation de quantité en considérant un moment où la quantité d'oxyde d'azote dans le gaz d'échappement qui passe par les dispositifs catalytiques de type à réduction sélective (41, 42) dépasse une valeur spécifiée en tant que moment où la quantité d'oxyde d'azote sortant des dispositifs catalytiques de type à réduction sélective (41, 42) n'est pas réduite à la quantité souhaitée par rapport à la quantité d'oxyde d'azote s'écoulant dans les dispositifs catalytiques de type à réduction sélective (41, 42).

3. Appareil de commande de gaz d'échappement selon la revendication 1,
dans lequel l'unité de commande électronique (56) est configurée pour réaliser le traitement d'augmentation de quantité en considérant un moment où la quantité d'eau d'urée pouvant être ajoutée est inférieure à une quantité d'ajout d'eau d'urée requise pour un taux de purification d'oxyde d'azote, un rapport de la quantité d'oxyde d'azote réduit par les dispositifs catalytiques de type à réduction sélective (41, 42) sur la quantité d'oxyde d'azote s'écoulant dans les dispositifs catalytiques de type à réduction sélective (41, 42), pour dépasser une valeur spécifiée en tant que moment où la quantité d'oxyde d'azote sortant des dispositifs catalytiques de type à réduction sélective (41, 42) n'est pas réduite à la quantité souhaitée par rapport à la quantité d'oxyde d'azote s'écoulant dans les dispositifs catalytiques de type à réduction sélective (41, 42).

4. Appareil de commande de gaz d'échappement selon l'une quelconque des revendications 1 à 3,
dans lequel l'unité de commande électronique (56) est configurée pour arrêter le traitement d'augmentation de quantité lorsque la quantité d'oxyde d'azote dans le gaz d'échappement passant par les dispositifs catalytiques de type à réduction sélective (41, 42) devient égale ou inférieure à une valeur spécifiée, alors que le traitement d'augmentation de quantité est réalisé.

5. Appareil de commande de gaz d'échappement selon l'une quelconque des revendications 1 à 4,
dans lequel l'unité de commande électronique (56) est configurée pour arrêter le traitement d'augmentation de quantité lorsqu'un taux de purification d'oxyde d'azote, un rapport de la quantité de réduction d'oxyde d'azote dans les dispositifs catalytiques de type à réduction sélective (41, 42) sur la quantité d'entrée d'oxyde d'azote dans les dispositifs catalytiques de type à réduction sélective (41, 42), devient au moins une valeur spécifiée alors que le traitement d'augmentation de quantité est réalisé.

6. Appareil de commande de gaz d'échappement selon l'une quelconque des revendications 1 à 5,
dans lequel l'unité de commande électronique (56) est configurée pour arrêter le traitement d'augmentation de quantité lorsque la température de lit du dispositif catalytique d'ammoniac à glissement (43) s'écarte de la région de température alors que le traitement d'augmentation de quantité est réalisé.

7. Appareil de commande de gaz d'échappement selon l'une quelconque des revendications 1 à 6,
dans lequel l'unité de commande électronique (56) est configurée pour commander le dispositif d'ajout de combustible (30 ; 18) en tant que traitement d'augmentation de quantité de sorte que la quantité d'ajout de combustible non brûlé augmente au fur et à mesure que la quantité l'oxyde d'azote s'écoulant dans les dispositifs catalytiques de type à réduction sélective (41, 42) augmente.

8. Appareil de commande de gaz d'échappement selon l'une quelconque des revendications 1 à 7,
dans lequel l'unité de commande électronique (56) est configurée pour commander le dispositif d'ajout de combustible (30 ; 18) en tant que traitement d'augmentation de quantité de sorte que la quantité d'ajout de combustible non brûlé pendant le traitement d'augmentation de quantité augmente au fur et à mesure qu'un taux de purification d'oxyde d'azote, un rapport de la quantité d'oxyde d'azote réduite par les dispositifs catalytiques de type à réduction sélective (41, 42) sur la quantité d'oxyde d'azote s'écoulant dans les dispositifs catalytiques de type à réduction sélective (41, 42) diminue.

9. Appareil de commande de gaz d'échappement selon l'une quelconque des revendications 1 à 8, comprenant en outre :
un dispositif catalytique d'oxydation d'étage avant (31) ayant un catalyseur d'oxydation supporté à l'intérieur de ce dernier et placé dans le passage d'échappement davantage en amont par rapport aux dispositifs catalytiques de type à réduction sélective (41, 42),
dans lequel l'unité de commande électronique (56) est configurée pour commander le dispositif d'ajout de combustible (30 ; 18) en tant que traitement d'augmentation de quantité de sorte que la quantité du combustible non brûlé ajouté par le dispositif d'ajout de combustible (30 ; 18) est une quantité dépassant la quantité du combustible non brûlé requise pour l'alimentation dans le passage d'échappement d'hydrocarbures dans une quantité consommée dans une réaction de réduction d'oxyde d'azote en fonction de la réduction catalytique sélective dans le dispositif catalytique d'oxydation d'étage avant (31) dans lequel les hydrocarbures sont utilisés en tant qu'agent de réduction.

10. Appareil de commande de gaz d'échappement selon la revendication 9,
dans lequel l'unité de commande électronique (56) est configurée pour calculer la somme de la quantité de combustible non brûlé requise pour l'alimentation dans le gaz d'échappement des hydrocarbures dans une quantité consommée dans la réaction de réduction d'oxyde d'azote en fonction de la réduction catalytique sélective dans le dispositif catalytique d'étage avant (31) dans lequel les hydrocarbures sont utilisés en tant qu'agent de réduction et la quantité de combustible non brûlé requise pour l'alimentation dans le gaz d'échappement des hydrocarbures dans une quantité consommée dans la réaction de réduction d'oxyde d'azote en fonction de la réduction catalytique sélective dans le dispositif catalytique d'ammoniac à glissement (43) dans lequel les hydrocarbures sont utilisés en tant qu'agent de réduction, l'unité de commande électronique (56) étant configurée pour exécuter l'ajout de combustible non brûlé en commandant le dispositif d'ajout de combustible (30 ; 18) en tant que traitement d'augmentation de quantité de sorte que la quantité de combustible non brûlé ajoutée par le dispositif d'ajout de combustible (30 ; 18) est la somme calculée des quantités de combustibles non brûlés.

11. Appareil de commande de gaz d'échappement selon l'une quelconque des revendications 1 à 10,
dans lequel le dispositif d'ajout de combustible (30 ; 18) comprend une soupape d'ajout de combustible (30) installée sur le passage d'échappement (19), la soupape d'ajout de combustible (30) étant configurée pour ajouter le combustible au gaz d'échappement dans le passage d'échappement (19), et dans lequel l'unité de commande électronique (56) est configurée pour réaliser l'ajout du combustible non brûlé en commandant la soupape d'ajout de combustible (30).

12. Appareil de commande de gaz d'échappement selon l'une quelconque des revendications 1 à 10,
dans lequel le dispositif d'ajout de combustible (30 ; 18) comprend un injecteur (18) injectant le combustible dans la chambre de combustion (17), et
dans lequel l'unité de commande électronique (56) est configurée pour ajouter le combustible non brûlé en commandant l'injection de combustible dans la chambre de combustion dans une course d'échappement par l'injecteur (18).
